Europäisches Patentamt

European Patent Office

Office européen des brevets

(11) Veröffentlichungsnummer: **0 509 291 A1**

# (12) EUROPÄISCHE PATENTANMELDUNG

(21) Anmeldenummer: **92105255.1**

(22) Anmeldetag: **27.03.92**

(51) Int. Cl.5: **F16B 5/00**, F16B 5/02, F16B 2/00

(30) Priorität: **11.04.91 DE 4111801**

(43) Veröffentlichungstag der Anmeldung:
**21.10.92 Patentblatt 92/43**

(84) Benannte Vertragsstaaten:
**DE FR GB**

(71) Anmelder: **MESSERSCHMITT-BöLKOW-BLOHM GmbH**
**Postfach 80 11 09**
**W-8000 München 80(DE)**

(72) Erfinder: **Jost, Michael**
**Eichleite 1**
**W-8022 Grünwald(DE)**
Erfinder: **Assmann, Karl-Heinz**
**Ebenweg 5**
**W-8201 Grainbach(DE)**

(54) **Verbindungselement zwischen zwei Bauteilen.**

(57) Verbindungselement zwischen zwei hohe Temperaturunterschiede standhaltenden Bauteilen, das elastisch zwischen Anschlußplatten angeordnet ist, wobei mindestens sechs kugelförmig gewölbte, mit den Anschlußplatten (2,3) verbundene Stege (4) angeordnet sind, welche auftretende Temperaturspannungen sowie Kräfte und Momente in allen Richtungen durch Verformung aufnehmen.

FIG. 1

EP 0 509 291 A1

Die Erfindung betrifft ein Verbindungselement zwischen zwei Bauteilen, die hohe Temperaturunterschiede aufweisen können.

Beim Betrieb von Über- und Hyperschallflugzeugen ergeben sich hohe thermische Belastungen durch die Grenzschichtaufheizung an der Flugzeughaut und die hohe Verdichtung des Einlaufes. Da sich am Flugzeug nicht überall die gleiche Temperatur einstellen kann und auch nicht gleiche Materialien verwendet werden können, kann es zwischen Bauteilen, die hohe Temperaturunterschiede aufweisen, zu hohen Temperaturspannungen kommen. Diese führen zu Verformungen, die von den bekannten Verbindungselementen nicht aufgenommen werden können. Als Folge davon können nicht nur die Verbindungselemente sondern auch die verbundenen Bauteile zu Schaden kommen.

Der Erfindung liegt die Aufgabe zugrunde, Verbindungselemente zu schaffen, welche die Verformungen, die zwischen Bauteilen mit hohen Temperaturunterschieden auftreten, in sich aufnehmen und auch die Temperaturunterschiede weitgehend abbauen.

Diese Aufgabe wird durch die im Anspruch 1 gekennzeichneten Merkmale gelöst. Vorteilhafte Ausgestaltungen der Erfindung sind in den Unteransprüchen gekennzeichnet.

Das erfinderische Verbindungselement mit den zwischen den Anschlußplatten kugelförmig gewölbten Stegen besitzt eine freie Verformbarkeit in allen Richtungen und ist trotzdem als Kraftübertragungselement geeignet. Dadurch, daß die Anschlußplatten aus schlecht wärmeleitfähigem Material sind und die Stege aufgrund ihrer Kugelform lange Wege für die Wärmeleitung darstellen, kann das Verbindungselement die auftetenden Temperaturunterschiede weitgehend abbauen. Außerdem kann das Verbindungselement bei einer Fertigung der Stege aus federelastischem Material die durch die Thermospannungen auftretenden Verformungen, auftretende Paßungenauigkeiten zwischen den Bauteilen und von außen auf eines der zu verbindenden Bauteile einwirkende Kräfte und Stöße federnd aufnehmen. Dabei kann durch die Stärke und Breite der Stege und deren Materialauswahl konstruktiv eine bestimmte Federkonstante vorausberechnet werden. Das Verbindungselement ist leicht herzustellen, hat ein nur geringes Gewicht und kann Kräfte und Momente in alle Richtungen aufnehmen.

Die Erfindung wird nachstehend anhand einer in der Zeichnung dargestellten Ausführungsform erläutert. Es zeigen:

Fig. 1    eine perspektivische Darstellung eines Verbindungselementes und

Fig. 2    das Verbindungselement nach Fig. 1 im eingebauten Zustand.

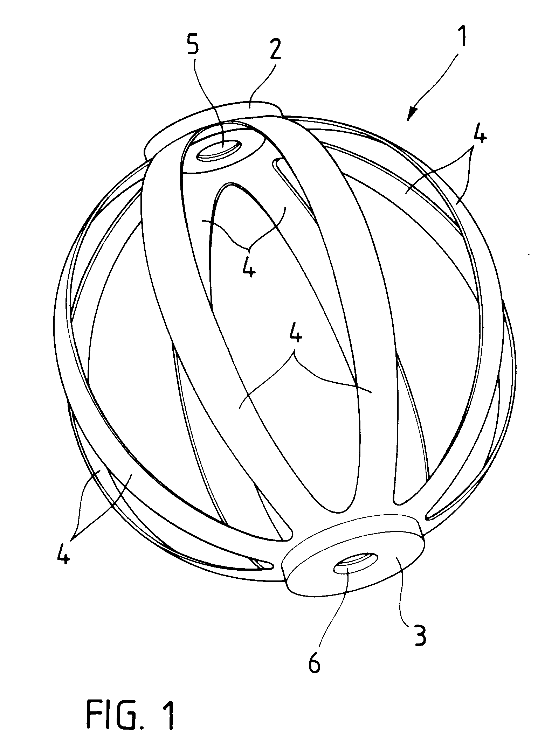

Ein vergrößert dargestelltes Verbindungselement 1 nach Fig. 1 besteht aus zwei Anschlußplatten 2 und 3 sowie aus acht kugelförmig gewölbten Stegen 4. Die Anschlußplatten 2 und 3 sind aus schlecht wärmeleitendem Material wie z.B. Siliziumkarbid, Keramik oder faserverstärktem Kunststoff. Die Stege bestehen aus einem hochfesten und trotzdem federndem Material wie z.B. Federstahl, einer Chrom- oder Titanlegierung. In den Anschlußplatten 2 und 3 sind Bohrungen 5 und 6 zum Verbinden des Verbindungselementes 1 mit entsprechenden Bauteilen.

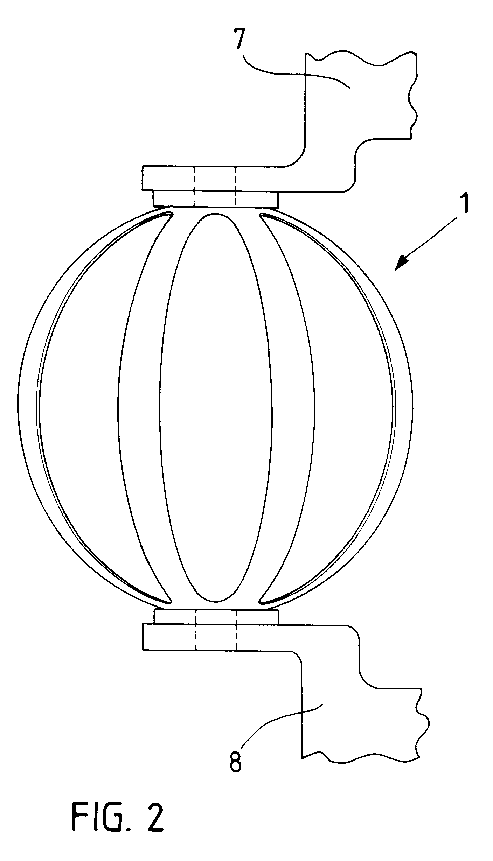

Fig. 2 zeigt das Verbindungselement 1 in eingebautem Zustand zwischen zwei Bauteilen 7 und 8. Die Verbindung kann dabei in bekannter Weise durch nicht dargestellte Schrauben und Muttern erfolgen.

**Patentansprüche**

1.  Verbindungselement zwischen zwei hohe Temperaturunterschiede standhaltenden Bauteilen, das elastisch zwischen Anschlußplatten angeordnet ist, **dadurch gekennzeichnet**, daß mindestens sechs kugelförmig gewölbte, mit den Anschlußplatten (2,3) verbundene Stege (4) angeordnet sind, welche auftretende Temperaturspannungen sowie Kräfte und Momente in allen Richtungen durch Verformung aufnehmen.

2.  Verbindungselement nach Anspruch 1, **dadurch gekennzeichnet**, daß die Anschlußplatten (2, 3) aus schlecht wärmeleitendem, hochwarmfestem Material gefertigt sind.

3.  Verbindungselement nach den Ansprüchen 1 und 2, **dadurch gekennzeichnet,** daß die Stege (4) aus hoch belastbarem, federelastischem Material gefertigt sind.

4.  Verbindungselement nach den Ansprüchen 1 bis 3, **dadurch gekennzeichnet**, daß die Anschlußplatten (2, 3) und die Stege (4) durch Schweißen miteinander verbunden sind.

5.  Verbindungselement nach den Ansprüchen 1 bis 3, **dadurch gekennzeichnet**, daß die Anschlußplatten (2, 3) und die Stege (4) durch Hartlöten miteinander verbunden sind.

FIG. 1

7

1

8

FIG. 2

## EINSCHLÄGIGE DOKUMENTE

EP 92105255.1

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | US - A - 4 221 154<br>(Mc. SHERRY)<br> * Zusammenfassung; Fig. *<br>-- | 1 | F 16 B 5/00<br>F 16 B 5/02<br>F 16 B 2/00 |
| A | DE - A - 2 546 105<br>(A. RAYMOND)<br> * Fig. *<br>-- | 1 | |
| A | AU - A - 41 309/68<br>(LA, TORRE, MAHONEY)<br> * Fig. *<br>-- | 1 | |
| A | DE - A - 2 352 527<br><br> * Fig. 1,2; Anspruch 5 *<br>---- | 1 | |

RECHERCHIERTE
SACHGEBIETE (Int Cl⁵)

A 63 B 21/00
A 63 B 33/00
B 64 C  7/00
E 04 C  5/00
F 16 B  1/00
F 16 B  2/00
F 16 B  5/00
F 16 B 12/00
H 01 R  4/00
H 01 R 13/00

Der vorliegende Recherchenbericht wurde für alle Patentansprüche erstellt.

| Recherchenort | Abschlußdatum der Recherche | Prüfer |
|---|---|---|
| WIEN | 02-06-1992 | RIEMANN |